# EUROPÄISCHE PATENTSCHRIFT

(11) **EP 1 764 373 B1**
(45) Veröffentlichungstag und Bekanntmachung des Hinweises auf die Patenterteilung: **27.04.2016**
(21) Anmeldenummer: 06076691.2
(22) Anmeldetag: 07.09.2006
(51) Int. Cl.: B01D 33/073, C08B 11/20, C08B 11/22, C08B 11/193, B01D 33/06

(54) **Verfahren zur Herstellung von Methylhydroxyalkylcellulose mit einer geringen Anzahl gefärbter Partikel**
Process for the manufacture of methyhydroxyalkylcellulose with a low content of colored particles
Procédé de préparation de cellulose méthylhydroxyalkylée présentant une faible teneur en particules colorées

(30) Priorität: 17.09.2005 DE 102005044452
(43) Veröffentlichungstag der Anmeldung: 21.03.2007
(73) Patentinhaber: Dow Global Technologies LLC, Midland, MI 48674 (US)
(72) Erfinder: Kowollik, Martin, 29683 Bad Fallingbostel (DE); Dannhorn, Wolfgang, 29614 Soltau (DE); Klohr, Erik-Andreas, 29664 Walsrode (DE); Schlesiger, Hartwig, 29664 Walsrode (DE); Kranz, Bernhard, 29669 Bomlitz (DE); Holste, Helmut, 29664 Walsrode (DE); Sonneneberg, Gerd, 29664 Walsrode (DE)
(74) Vertreter: f & e patent

(56) Entgegenhaltungen:
- EP-A2- 0 326 939
- DE-A1- 3 622 103
- DE-C- 602 759
- DATABASE INTERNET [Online] April 2003 (2003-04), XP002412772 gefunden im WWW.BHS-SONTHOFEN.DE/MISC/DDF.PDF
- KARPPINEN V ET AL: "Solutions for Filtration Problems with BHS Filters" April 1997 (1997-04), FILTRATION AND SEPARATION, CROYDON, GB, PAGE(S) 214-215 , XP004136705 ISSN: 0015-1882 * das ganze Dokument *

## Beschreibung

Die vorliegende Erfindung beschreibt ein Verfahren zur Herstellung von Methylhydroxyalkylcellulose mit geringer Anzahl gefärbter Partikel durch Separation von Methylhydroxyalkylcellulose aus wässriger Suspension mit anschließender Wäsche der Methylhydroxyalkylcellulose unter Verwendung eines speziell ausgestatteten Druckdrehfilters.

Methylhydroxyalkylcellulose wird in der Regel durch Alkalisieren von Zellstoff und anschließende Umsetzung mit Veretherungsmittel wie Methylchlorid, Ethylenoxid oder Propylenoxid in Gegenwart geeigneter Löse- bzw. Suspendiermitteln hergestellt (vgl. Ullmanns Enzyklopädie der technischen Chemie, 4. Auflage, Band 9, Seite 205 oder Houben-Weyl, Methoden der organischen Chemie, 4. Auflage, Band E 20, Teil 3, Seite 2047). Die bei der Herstellung der Methylhydroxyalkylcellulose erhaltenden Roh-Methylhydroxyalkylcellulose enthalten unerwünschte Nebenprodukte wie Kochsalz, Methanol, Glykole, etc. Je nach Höhe des Substitutionsgrades zeigt die hergestellte Methylhydroxyalkylcellulose ein unterschiedliches, temperaturabhängiges Löseverhalten in wässrigen Medien. Die hier beschriebenen Methylhydroxyalkylcellulosen sind in der Regel in heißem Wasser unlöslich und flocken aus, so dass die unerwünschten Nebenprodukte nach dem Stand der Technik durch Suspension der Roh-Methylhydroxyalkylcellulose in Heißwasser gelöst und in einem anschließenden Separations- und Waschschritt aus der Roh-Methylhydroxyalkylcellulose ausgewaschen werden. Wird im folgenden der Begriff Methylhydroxyalkylcellulosesuspension verwendet, so ist, wenn nichts anderes erwähnt ist, immer eine Suspension von Roh-Methylhydroxyalkylcellulose und der bei der Herstellung der Roh-Methyl-hydroxyalkylcellulose anfallenden Nebenprodukte in heißem Wasser zu verstehen. Einige nach dem Stand der Technik eingesetzte Separations-, Reinigungs- und Waschverfahren werden in EP 03 05 898 A2, EP 03 05 899 A2 und EP 0 632 056 B1 beschrieben. Je nach Anwendungsgebiet der Methylhydroxyalkylcellulose werden mehr oder weniger hohe Anforderungen an deren Reinheit gestellt, so dass ein geeigneter Waschschritt unabdingbarer Bestandteil des Herstellverfahrens sein muss.

Um Produkte für unterschiedlichste Anwendungsbereiche bereitstellen zu können, müssen Methylhydroxyalkylcellulosen mit unterschiedlichen Substitutionsgraden herstellbar sein. Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben. Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben. Die Bestimmung der Seitengruppen erfolgt anhand der Zeisel-Methode (Literatur: G. Bartelmus und R. Ketterer, Z. Anal. Chem. 286 (1977) 161-190).

Der Substitutionsgrad der Methylhydroxyalkylcellulose hat Einfluss auf die benötigten Temperaturen der Heißwassersuspension und der im Waschschritt verwendeten Waschflüssigkeiten. Üblicherweise liegen die Temperaturen der Heißwassersuspension und der Waschflüssigkeiten zwischen 80°C und 100°C, bevorzugt zwischen 85°C und 98°C.

Über den Grad der Veretherung und die Art der Substituenten werden verschiedene Eigenschaften der Methylhydroxyalkylcellulose eingestellt, wie z.B. der thermische Flockpunkt, die Löslichkeit in Wasser oder organischen Lösungsmitteln, die Viskosität der hergestellten Lösungen, das Filmbildevermögen, das Wasserrückhaltevermögen oder die Klebkraft.

Aufgrund dieser Fülle hervorragender Eigenschaften werden Methylhydroxyalkylcellulosen in unterschiedlichsten Anwendungsbereichen eingesetzt.

Einerseits werden sie in technischen Anwendungen z.B. als Verdicker, Kleber, Bindemittel, Dispergiermittel, Wasserrückhaltemittel, Schutzkolloid, Stabilisator, Suspendiermittel, Emulgiermittel, Filmbindemittel und als Konsistenzregler und Verarbeitungshilfsmittel in mineralischen und dispersionsbasierenden Baustoffsystemen eingesetzt. Andererseits finden sie in sensitiven Anwendungen, beispielsweise bei der Herstellung von kosmetischen und pharmazeutischen Präparaten, beim Coating von Tabletten, in Augentropfensuspensionen, in Kontaktlinsenreiniger und dergleichen oder bei der Herstellung von Lebensmitteln Verwendung, in denen Celluloseether gefordert werden, die sich durch besonders hohe Reinheit auszeichnen (vergl. WO 00/32637). Hohe Reinheit bedeutet die Einhaltung der entsprechenden pharmazeutischen Regularien (z.B. Pharmazeutische Monographien) z.B. hinsichtlich Substitutionsgrad, Schwermetallgehalt, Viskosität der Lösung, organische Verunreinigungen, etc. Darüber hinaus müssen weitere rechtliche Regelungen und darüber hinausgehende Kundenanforderungen eingehalten werden.

Zum Dritten finden Methylhydroxyalkylcellulosen in hochwertigen technischen Anwendungen Verwendung, wie z.B. bei der Herstellung besonderer Keramiken und der Suspensions-Polymerisation, die sich ebenfalls durch besonders hohe Reinheit auszeichnen. Hohe Reinheit bedeutet in diesen Anwendungen insbesondere geringe Verschmutzungen physikalischer Art.

Ein wichtiges Qualitätsmerkmal der Kunden innerhalb der sensitiven Anwendungen und der hochwertigen technischen Anwendungen ist die visuelle Beurteilung der Methylhydroxyalkylcellulose hinsichtlich physikalischer Verunreinigungen, sogenannter gefärbter Partikel.

Methylhydroxyalkylcellulose für sensitive Anwendungen und hochwertige technische Anwendungen ist hinsichtlich gefärbter Partikel weder in pharmazeutischen noch in anderen Regelwerken spezifiziert. Die Beurteilung dieses Qualitätsmerkmals obliegt den Kunden und erfolgt in der Regel durch subjektive, visuelle Beurteilung. Dementsprechend erfolgt die Beurteilung der Methylhydroxyalkylcellulose hinsichtlich gefärbter Partikel im Vergleich zu Mustern, die nach Bemusterung durch den Kunden beurteilt wurden.

Es ergeben sich folgende vier Einstufungen:
(1) sehr gut, das heißt besser als ein vom Kunden freigegebenes Vergleichsmuster
(2) gut vergleichbar mit einem vom Kunden freigegebenem Vergleichsmuster
(3) akzeptabel, das heißt nur geringfügig schlechter als ein vom Kunden freigegebenes Vergleichsmuster und
(4) nicht akzeptabel, das heißt schlechter als ein vom Kunden freigegebenes Vergleichsmuster.

In EP 1 375 523 A1 wird eine Methode zur Selektion von Methylhydroxyalkylcellulose beschrieben, um zum einen verbesserte Eigensehaften bei der Filtration von wässrigen Lösungen der Methylhydroxyalkylcellulose und zum anderen Filme aus der wässrigen Lösung der Methylhydroxyalkylcellulose ohne Fehlstellen zu erhalten. Die hier beschriebene Methode eignet sich grundsätzlich auch für die Herstellung von Methylhydroxyalkylcellulose mit geringen Anteilen gefärbter Partikel. Nachteilig an dem in EP 1 375 523 A1 beschriebenen Verfahren ist jedoch offensichtlich, dass Selektion in industriellen Herstellprozessen immer dazu führt, dass zwangsweise Produktmengen anfallen, welche die Selektionsbedingungen nicht erfüllen und dementsprechend aufwendig entsorgt, einem Reprozessingschritt unterzogen oder anderweitig weiterverarbeitet werden müssen.

Nach der Suspendierung der Roh-Methylhydroxyalkylcellulose in heißem Wasser erfolgt die Abtrennung der Methylhydroxyalkylcellulose vom Suspensionsmedium nach dem Stand der Technik im allgemeinen durch Pressen, Zentrifugieren oder Filtrieren, wobei man diskontinuierliche und kontinuierliche arbeitende Trennungstechniken unterscheidet (Grundoperationen chemischer Verfahrenstechnik, 11. Auflage, Seite 164).

Grundsätzlich eignen sich kontinuierlich und diskontinuierlich arbeitende Pressaggregate, wie z.B. Etagen-, Seiher-, Plattenfilter-, Siebband- und Schneckenpressen, zum Abtrennen der Methylhydroxyalkylcellulose vom Suspensionsmedium. Zentrifugen eignen sich ebenfalls zum Abtrennen von Methylhydroxyalkylcellulose vom Suspensionsmedium. Zu den bekannten Zentrifugenarten gehören z.B. Stülp-, Schäl-, Schub-, Siebschnecken-, Schwing- und Gleitzentrifugen und Dekanter.

Eine weitere Methode, die zur Abtrennung von Methylhydroxyalkylcellulose Bedeutung erlangt hat, ist das Filtrieren. Hier wird ebenfalls in diskontinuierliche und kontinuierliche Apparate unterteilt. Zu den diskontinuierlich arbeitenden Filtern gehören z.B. Festbettfilter, Filternutschen, Kerzenfilter, Blattfilter und Tellerfilter. Die Abtrennung von Methylhydroxyalkylcellulose vom Suspensionsmedium mittels diskontinuierlich arbeitender Filter ist im allgemeinen weniger bevorzugt. Nachteil ist hier das Be- und Entladen des Filters, das erhebliche Zeit erfordert. Somit eigen sich diskontinuierlich arbeitende Filter nicht für ausreichend große, wirtschaftliche Durchsatzmengen.

Als Trennaggregate bestens bewährt haben sich kontinuierlich arbeitende Filter, wie Band- und Drehfilter und insbesondere geeignet sind Druckdrehfilter, wie sie aus WO 02/100512 A1 bekannt sind.

Mit diesen Druckdrehfiltern lassen sich Methylhydroxyalkylcellulosen, die beispielsweise in technischen Anwendungen Einsatz finden, großtechnisch wirtschaftlich trennen. Soll aber die Methylhydroxyallcylcellulose in sensitiven Anwendungen oder hochwertigen technischen Anwendungen eingesetzt werden, die hohe Anforderungen an die Reinheit stellen, dann eignen sich die herkömmlichen Druckdrehfilter mit der für technische Anwendungen optimierten Ausrüstung und den entsprechend eingesetzten Werkstoffen, die mit der Suspension und damit auch mit der Methylhydroxyalkylcellulose in Kontakt treten, nicht.

Es wurde nämlich gefunden, dass der Einsatz herkömmlicher Druckdrehfilter in der Herstellung von Methylhydroxyalkylcellulose für sensitive und für hochwertige technischen Anwendungen zu einer nicht akzeptablen Anzahl gefärbter Partikel in der Methylhydroxyalkylcellulose führt. Die Farbe der Partikel kann dabei in Abhängigkeit der verwendeten Druckdrehfilter von gräulichen über bräunliche bis hin zu schwarzen Farbtönen variieren.

Eine denkbare Art der Entstehung dieser gefärbten Partikel hängt mit dem unvermeidlichen Abrieb der eingesetzten Kunststoffe zusammen. Dieser Abrieb führt bei der Herstellung von Methylhydroxyalkylcellulose für technische Anwendungen zu keiner Beeinträchtigung des Produktes.

Im Herstellprozess der Methylhydroxyalkylcellulose für sensitive Anwendungen und hochwertige technische Anwendungen fallen die Suspensionen der Roh-Methylhydroxyalkylcellulose und der zugehörigen Nebenprodukte in besonderen Zusammensetzungen an, die ein höheres Maß an Abrasion gegenüber Kunststoffen, die üblicherweise in der Druckdrehfiltertechnologie bei der Herstellung von Methylhydroxyalkylcellulose werden, zeigen.

Möglicherweise führt diese erhöhte Abrasionswirkung der Suspensionen, die bei der Herstellung der Methylhydroxyalkylcellulose für sensitive und hochwertige technische Anwendungen anfallen, zu einer erhöhten, nicht akzeptablen Anzahl an gefärbten Partikeln im Endprodukt.

Der vorliegenden Erfindung lag somit die Aufgabe zu Grunde, ein effektives und wirtschaftliches, kontinuierliches Verfahren mit hoher Verfügbarkeit und hoher Durchsatzleistung zur Separation und Wäsche von Suspensionen von heißwasserunlöslicher Methylhydroxyalkylcellulose und beschriebener Nebenprodukte in heißem Wasser so bereitzustellen, dass das Endprodukt zum einen gezielt hergestellt werden kann und nicht aus einer großen Menge von Produkt selektiert werden muss und zum anderen nur eine geringe, für sensitive und hochwertige technische Anwendungen akzeptable Anzahl gefärbter Partikel enthält.

Die erfindungsgemäße Lösung besteht für das Verfahren oben genannter Art darin, dass ein kontinuierlich arbeitender Druckdrehfilter mit einer speziellen Ausrüstung an Trennplatten als Mittel zum Abtrennen der Suspensionsflüssigkeit und zum Waschen der Methylhydroxyalkylcellulose verwendet wird.

Druckdrehfilter sind in der Technik bekannt. Ein Druckdrehfilter ist ein kontinuierlich arbeitendes Filter in druckdichter Ausführung. Es besteht im wesentlichen aus einer metallischen Filtertrommel, die sich mit stufenlos regelbarer Drehzahl dreht, einem zugehörigen Steuerkopf und einem metallischen, druckfesten Gehäuse. Der Ringraum zwischen Filtertrommel und Gehäuse wird seitlich durch Stopfbuchsen oder andere Dichtungssysteme abgedichtet. Radial ist das Gehäuse durch Zonentrennmittel, die pneumatisch an die Trommel angepresst werden, in druckdichte Kammern unterteilt. Die Trommeloberfläche besteht aus einzelnen Filterzellen, die über Ablaufrohre mit dem Steuerkopf verbunden sind. Eine detaillierte Beschreibung kann WO 02/100512 A1 entnommen werden. Die zu filtrierende Suspension wird unter konstantem Vordruck stetig der Trennzone des Druckdrehfilters zugeführt, wobei sich in den Filterzellen der rotierenden Trommel ein Filterkuchen aufbaut, der anschließend in die nachfolgenden Kammern zur Nachbehandlung, z.B. Wäsche und/oder Behandlung mit Wasserdampf, gelangt. Die Abnahme des Filterkuchens erfolgt in einer drucklosen Zone des Filters entweder durch einen selbsttätig agierenden, einstellbaren, mechanischen Schaber oder/ und über einen gezielten Rückblasstoß typischerweise mittels Druckluft, Stickstoff oder Wasserdampf. Eine genaue Beschreibung der Zonentrennmittel findet sich z.B. in WO 02/100512 A1.

Bei der Separation und Wäsche von Methylhydroxyalkylcellulosesuspensionen mittels Druckdrehfiltern wird der Filterkuchen nach dem Stand der Technik mit Wasserdampf behandelt. Insbesondere der Filterkuchen vor der drucklosen Abnahmezone in einer separaten Trennzone, der sogenannten Trocknungszone, mit Wasserdampf zur Einstellung der Restfeuchte behandelt. In vorgenannten Verfahren wird üblicherweise Sattdampf mit Drücken zwischen 0,1 bar,ü bis 6,0 bar,ü, bevorzugt zwischen 0,5 bar,ü und 4,5 bar,ü und besonders bevorzugt zwischen 0,8 bar,ü und 3,0 bar,ü eingesetzt. Den genannten Drücken sind durch physikalische Gesetzmäßigkeiten eindeutig folgende Sattdampftemperaturen zuzuordnen: 102,3°C (0,1 bar,ü), 111,4°C (0,5 bar,ü), 116,9°C (0,8 bar,ü), 143,6°C (3,0 bar,ü), 155,5°C (4,5 bar,ü), 165,0°C (6,0 bar,ü) (vgl. z.B. VDI-Wärmeatlas).

Die vorliegende Erfindung befasst sich im weiteren mit einem Einzelteil des Zonentrennmittels, einer Dichtschicht, hier als Trennplatte bezeichnet, die aus entsprechend geeigneten Kunststoffen gefertigt sein muss. An diese Trennplatte werden besondere Anforderungen gestellt, da sie zum einen im Gehäuse des Druckdrehfilters fest angebracht ist und gegen die metallische Trommel angepresst wird und folglich bei der Drehbewegung der Trommel gegen die Stege, welche die einzelnen Kammern auf der Trommeloberfläche bilden, reibt und zum anderen unmittelbar mit der zu filtrierenden und zu waschenden Methylhydroxyalkylcellulosesuspension und demzufolge auch mit dem Filterkuchen in Kontakt tritt.

Typischerweise werden die Trennplatten bei Druckdrehfiltern aus den Kunststoffen Polyethylen (PE), Polytetrafluorethylen (RTFE) ggf. mit Zusatz von z.B. 40% von z.B. Glasfasern, Glimmer, Kohle und/oder Graphit, Polyvinylidenfluorid (PVDF) und Polyetheretherketon (PEEK) gefertigt. Gemäß dem Stand der Technik wird je nach Anwendungsfall der entsprechend geeignete Kunststoff ausgewählt und daraus alle Trennplatten des Druckdrehfilters gefertigt. Allerdings können die allgemein bekannten mechanischen und thermischen Eigenschaften dieser Kunststoffe nur bedingt als Hilfe für die Auswahl des geeigneten Kunststoffes für die Trennelemente eines Druckdrehfilters, der für die Separation und Wäsche einer Heißwassersuspensionen von Roh-Methylhydroxyalkylcellulose und der zugehörigen Nebenprodukte innerhalb der Herstellung einer Methylhydroxyalkylcellulose für sensitive und hochwertige technische Anwendungen eingesetzt werden soll, herangezogen werden, da das von der Methylhydroxyalkylcellulose zu trennende Filtrat diverse Nebenprodukte, wie z.B. NaCl in hoher Konzentration, enthält und bei Temperaturen größer 75°C, bevorzugt größer 85°C und besonders bevorzugt größer 92°C vorliegt. Beide Faktoren haben einen erheblichen Einfluss auf die Eigenschaften der Kunststoffe beim reibenden Einsatz als Trennelement auf der metallischen Trommel eines Druckdrehfilters. Es muss also immer das entsprechende System "Kunststoff, Stahl, Methylhydroxyalkylcellulosesuspension inklusive der vorliegenden Nebenprodukte" bei der Beurteilung der Eigenschaften, insbesondere der Beständigkeits-, Abrieb- und Gleiteigenschaften, betrachtet werden. In dem vorgenannten Verfahren zur Separation und Wäsche von Methylhydroxyalkylcellulosesuspensionen für sensitive und hochwertige technische Anwendungen weisen alle im allgemeinen eingesetzten Kunststoffe für die Trennplatten erhebliche Nachteile im Hinblick auf den wirtschaftlichen Einsatz, die Beständigkeit bei den vorgenannten Prozessbedingungen oder hinsichtlich der Abriebfestigkeit und damit der Anzahl der gefärbten Partikel im Endprodukt auf.

Typische und gebräuchliche Materialien für die Herstellung solcher Trennplatten sind beispielsweise Polyethylen (PE), Polytetrafluorethylen (PTFE), Polytetrafluorethylen (PTFE) mit Zusatz von typischerweise 10% bis 40% Glasfasern, Glimmer, Kohle und/oder Graphit und Polyetheretherketon (PEEK).

Bei der herkömmlichen Ausrüstung des Druckdrehfilters, bei der sämtlicher Trennplatten aus einem der genannten Werkstoffe (d.h. alle Trennplatten aus demselben Werkstoff) gefertigt sind, wird bei der Herstellung von Methylhydroxyalkylcellulose für sensitive und hochwertige technische Anwendungen eine nicht akzeptable Anzahl an gefärbten Partikeln im Endprodukt gefunden.

Überraschenderweise wurde eine Ausrüstung eines Druckdrehfilters mit Trennplatten gefunden, die sich dadurch auszeichnet, dass die eingesetzten Trennplatten zwar aus oben beschriebenen Kunststoffen bestehen, die einzelnen Trennplatten jedoch aus unterschiedlichen Kunststoffen, und dass die oben beschriebenen Nachteile nicht auftreten.

In dieser erfindungsgemäßen Ausrüstung sind die Kunststoffe der Trennplatten so zu wählen, dass die Trennplatten, welche die Trocknungszone zu beiden Seiten abdichten, aus Polyetheretherketon (PEEK), bestehen und dass die übrigen Trennplatten aus Polyvinylidenfluorid (PVDF), bestehen.

Bei der Verwendung eines Druckdrehfilters mit dieser erfindungsgemäßen Ausrüstung an Trennplatten werden alle dargestellten Nachteile bei der Verwendung anderer Apparate oder der Verwendung eines Druckdrehfilters mit Trennplatten aus anderen Kunststoffe vermieden!

Ein erster Gegenstand der vorliegenden Erfindung ist demnach ein Druckdrehfilter, der eine Mehrzahl von Zonen, darunter eine Trocknungszone, aufweist, die voneinander durch Trennplatten getrennt werden, dadurch gekennzeichnet, dass die Trennplatten, welche die Trocknungszone zu beiden Seiten abdichten, aus Polyetheretherketon (PEEK), bestehen und dass die übrigen Trennplatten aus Polyvinylidenfluorid (PVDF)) bestehen.

Ein weiterer Gegenstand der vorliegenden Erfindung ist ein Verfahren zur Herstellung von Methylhydroxyalkylcellulose, welches umfasst, eine Methylhydroxyalkylcellulosesuspension unter Verwendung eines erfindungsgemäßen Druckdrehfilters zu filtrieren und/oder zu waschen.

In einer bevorzugten Ausführungsform ist die Methylhydroxyalkylcellulose eine Methylhydroxypropylcellulose (MHPC), welche einen Massenanteil an Hydroxypropoxygruppen von 3,0 bis 35,0 %, insbesondere von 4,0 bis 32,0 % und Massenanteil an Methoxylgruppen von 15,0 bis 35,0 %, insbesondere 16,5 bis 30,0 % aufweist.

In einer anderen bevorzugten Ausführungsform ist die Methylhydroxyalkylcellulose eine Methylhydroxyethylcellulose (MHEC), welche einen Substuitutionsgrad MS (HE) von 0,10 bis 1,00, insbesondere von 0,15 bis 0,80 und einen Substuitutionsgrad DS (M) von 1,25 bis 2,20, insbesondere 1,40 bis 2,00 aufweist.

Die Erfindung soll durch die folgenden Beispiele verdeutlicht werden, ohne jedoch auf diese beschränkt zu sein.

### Beispiele

### Produktbeispiel 1

Hypromellose gemäß Pharma Monographie als Type 2910: Die zu separierende und zu waschende Roh-Methylhydroxypropylcellulose wird durch den in Houben-Weyl, Methoden der Organischen Chemie, Makromolekulare Stoffe, 4. Auflage, Band E 20, S. 2042 (1987) beschriebenen Prozess hergestellt. Nach Entfernung überschüssiger Reaktandenmengen wies die erhaltene Roh-Methylhydroxypropylcellulose folgende Werte auf:

| | |
|---|---|
| DS (M): | 1,95 |
| MS (HP): | 0,31 |
| Kochsalzgehalt: | 20 % |

### Produktbeispiel 2

Hypromellose gemäß Pharma Monographie als Type 2208: Die zu separierende und zu waschende Roh-Methylhydroxypropylcellulose wird durch den beschriebenen Prozess hergestellt. Nach Entfernung überschüssiger Reaktandenmengen wies die erhaltene Roh-Methylhydroxypropylcellulose folgende Werte auf:

| | |
|---|---|
| DS (M): | 1,47 |
| MS (HP): | 0,21 |
| Kochsalzgehalt: | 16 % |

### Produktbeispiel 3

Die zu separierende und zu waschende Roh-Methylhydroxyethylcellulose wird durch den beschriebenen Prozess hergestellt. Nach Entfernung überschüssiger Reaktandenmengen wies die erhaltene Roh-Methylhydroxyethylcellulose folgende Werte auf:

| | |
|---|---|
| DS (M): | 1,58 |
| MS (EP): | 0,29 |
| Kochsalzgehalt: | 18 % |

### Vergleichsbeispiel 1

Die in heißem Wasser suspendierte Roh-Methylhydroxypropylcellulose (Produktbeispiel 1 oder Produktbeispiel 2) bzw. Roh-Methylhydroxyethylcellulose (Produktbeispiel 3) wird mit dem oben beschriebenen Druckdrehfilter separiert und gewaschen. Der Druckdrehfilter ist hierbei mit Trennplatten aus Polytetrafluorethylen (PTFE) mit Zusatz von 25 % Kohle/Graphit ausgerüstet. Nach den folgenden Trocknungs- und Mahlprozessen wird die Methylhydroxypropylcellulose bzw. Methylhydroxyethylcellulose wie oben beschrieben hinsichtlich des Anteils an gefärbten Partikeln charakterisiert. Es wurde in allen Fällen ein nicht akzeptabeler Anteil an gefärbten Partikeln gefunden (Bewertung: 4).

### Beispiel 2

Die in heißem Wasser suspendierte Roh-Methylhydroxypropylcellulose (Produktbeispiel 1 oder Produktbeispiel 2) bzw. Roh-Methylhydroxyethylcellulose (Produktbeispiel 3) wird mit dem oben beschriebenen Druckdrehfilter separiert und gewaschen. Der Druckdrehfilter ist hierbei mit Trennplatten so ausgerüstet, dass die Trennplatten, welche die Trocknungszone zu beiden Seiten abdichten, aus Polyetheretherketon (PEEK), bestehen und dass die übrigen Trennplatten aus Polyvinylidenfluorid (PVDF), bestehen.

Nach den folgenden Trocknungs- und Mahlprozessen wird die Methylhydroxypropylcellulose bzw. Methylhydroxyethylcellulose wie oben beschrieben hinsichtlich des Anteils an gefärbten Partikeln charakterisiert. Dabei wurde in allen Fällen ein gut akzeptabeler Anteil an gefärbten Partikeln gefunden (Bewertung: 1-2).

## Patentansprüche

1. Druckdrehfilter, der eine Mehrzahl von durch Trennplatten voneinander getrennte Zonen, darunter mindestens eine Trockenzone, aufweist, **dadurch gekennzeichnet, dass** die Trennplatten, welche die Trocknungszone(n) abdichten, aus Polyetheretherketon (PEEK) bestehen und dass die Trennplatten, welche die anderen Zonen abdichten, aus Polyvinylidenfluorid (PVDF) bestehen.

2. Verwendung eines Druckdrehfilters gemäß Anspruch 1 zur Separation von Methylhydroxyalkylcellulose aus wässriger Suspension.

3. Verfahren zur Herstellung von Methylhydroxyalkylcellulose umfassend die Separation der Methylhydroxyalkylcellulose aus einer wässrigen Suspension unter Verwendung eines Druckdrehfilters gemäß Anspruch 1 .

4. Verfahren gemäß Anspruch 3, **dadurch gekennzeichnet, dass** die Methylhydroxyalkylcellulose eine Methylhydroxyethylcellulose (MHEC) oder eine Methylhydroxypropylcellulose (MHPC) ist.

5. Verfahren gemäß Anspruch 3 oder 4, **dadurch gekennzeichnet, dass** die Methylhydroxyalkylcellulose eine Methylhydroxypropylcellulose (MHPC) ist, welche einen Massenanteil an Hydroxypropoxygruppen von 3,0 bis 35,0 %, und einen Massenanteil an Methoxylgruppen von 15,0 bis 35,0 % aufweist.

6. Verfahren gemäß Anspruch 5, **dadurch gekennzeichnet, dass** die Methylhydroxypropylcellulose (MHPC) einen Massenanteil an Hydroxypropoxygruppen von 4,0 bis 32,0 % und einen Massenanteil an Methoxylgruppen von 16,5 bis 30,0 % aufweist.

7. Verfahren gemäß Anspruch 3 oder 4, **dadurch gekennzeichnet, dass** die Methylhydroxyalkylcellulose eine Methylhydroxyethylcellulose (MHEC) ist, welche einen Substitutionsgrad MS (HE) von 0,10 bis 1,00und einen Substitutionsgrad DS (M) von 1,25 bis 2,20 aufweist.

8. Verfahren gemäß Anspruch 7, **dadurch gekennzeichnet, dass** die Methylhydroxyethylcellulose (MHEC) einen Substitutionsgrad MS (HE) von von 0,15 bis 0,80 und einen Substitutionsgrad DS (M) 1,40 bis 2,00 aufweist.

## Claims

1. A rotary pressure filter which comprises a plurality of zones separated from one another by separation plates, including at least one drying zone, **characterized in that** the separation plates which seal off the drying zone(s) consist of polyether ether ketone (PEEK) and the separation plates which seal of the other zones consist of polyvinylidene fluoride (PVDF).

2. The use of a rotary pressure filter according to claim 1 for the separation of methylhydroxyalkylcellulose from an aqueous suspension.

3. A process for the preparation of methylhydroxyalkylcellulose comprising the separation of the methylhydroxyalkylcellulose from an aqueous suspension using a rotary pressure filter according to claim 1.

4. The process according to claim 3, **characterized in that** the methylhydroxyalkylcellulose is a methylhydroxyethylcellulose (MHEC) or a methylhydroxypropylcellulose (MHPC).

5. The process according to claim 3 or 4, **characterized in that** the methylhydroxyalkylcellulose is a methylhydroxypropylcellulose (MHPC) which has a proportion by mass of hydroxypropoxy groups of from 3.0 to 35.0 % and a proportion by mass of methoxyl groups of from 15.0 to 35 %.

6. The process according to claim 5, **characterized in that** the methylhydroxypropylcellulose (MHPC) has a proportion by mass of hydroxypropoxy groups of from 4.0 to 32 % and a proportion by mass of methoxyl groups of from 16.5 to 30 %.

7. The process according to claim 3 or 4, **characterized in that** the methylhydroxyalkylcellulose is a methylhydroxyethylcellulose (MHEC) which has a degree of substitution MS (HE) of from 0.10 to 1.00 and a degree of substitution DS (M) of from 1.25 to 2.20.

8. The process according to claim 7, **characterized in that** the methylhydroxyethylcellulose (MHEC) has a degree of substitution MS (HE) of from 0.15 to 0.80 and a degree of substitution DS (M) of from 1.40 to 2.00.

## Revendications

1. Filtre rotatif sous pression présentant une pluralité de zones séparées les unes des autres par des plaques de séparation, dont au moins une zone de séchage, **caractérisé en ce que** les plaques de séparation étanchéifiant la(les) zone(s) de séchage sont constituées de polyétheréthercétone (PEEK) et que les plaques de séparation étanchéifiant les autres zones sont constituées de fluorure de polyvinylidène (PVDF).

2. Utilisation d'un filtre rotatif sous pression conformément à la revendication 1 servant à séparer une méthylhydroxyalkylcellulose d'une suspension aqueuse.

3. Procédé de préparation de méthylhydroxyalkylcellulose comprenant la séparation de la méthylhydroxyalkylcellulose d'une suspension aqueuse en utilisant un filtre rotatif sous pression conformément à la revendication 1.

4. Procédé conformément à la revendication 3, **caractérisé en ce que** la méthylhydroxyalkylcellulose est une méthylhydroxyéthylcellulose (MHEC) ou une méthylhydroxypropylcellulose (MHPC).

5. Procédé conformément à la revendication 3 ou 4, **caractérisé en ce que** la méthylhydroxyalkylcellulose est une méthylhydroxypropylcellulose (MHPC) contenant de 3,0 à 35,0 % en poids de groupes hydroxypropoxy et de 15,0 à 35,0 % en poids de groupes méthoxyle.

6. Procédé conformément à la revendication 5, **caractérisé en ce que** la méthylhydroxypropylcellulose (MHPC) contient de 4,0 à 32,0 % en poids de groupes hydroxypropoxy et de 16,5 à 30,0 % en poids de groupes méthoxyle.

7. Procédé conformément à la revendication 3 ou 4, **caractérisé en ce que** la méthylhydroxyalkylcellulose est une méthylhydroxyéthylcellulose (MHEC) présentant un degré de substitution MS (HE) de 0,10 à 1,00 et un degré de substitution DS (M) de 1,25 à 2,20.

8. Procédé conformément à la revendication 7, **caractérisé en ce que** la méthylhydroxyéthylcellulose (MHEC) présente un degré de substitution MS (HE) de 0,15 à 0,80 et un degré de substitution DS (M) de 1,40 à 2,00.
